# FASCICULE DE BREVET EUROPEEN

(11) **EP 0 925 200 B1**
(45) Date de publication et mention de la délivrance du brevet: **01.08.2001**
(21) Numéro de dépôt: 97919448.7
(22) Date de dépôt: 01.04.1997
(51) Int. Cl.: B60J 11/00, E04H 9/14, B23Q 11/08

(54) **BACHE CUVELEE DE PROTECTION CONTRE LES INONDATIONS, LES POUSSIERES, LE SOLEIL**
MIT EINEM BODEN VERSEHENE PLANE ZUM SCHUTZ GEGEN HOCHWASSER, STAUB UND SONNE
SHELL-TYPE COVERING FOR PROTECTION AGAINST FLOODS, DUST AND SUNLIGHT

(30) Priorité: 05.04.1996 FR 9604541
(43) Date de publication de la demande: 30.06.1999
(73) Titulaire: Urtiti, Aldo, 06800 Cagnes-sur-Mer (FR)
(72) Inventeur: Urtiti, Aldo, 06800 Cagnes-sur-Mer (FR)
(74) Mandataire: Hautier, Jean-Louis
(86) Numéro de dépôt international: FR9700573
(87) Numéro de publication internationale: WO9737867

(56) Documents cités:
- FR-A- 2 531 475
- GB-A- 2 078 610
- US-A- 1 801 247
- US-A- 2 300 408
- US-A- 3 474 803
- US-A- 4 315 535
- US-A- 4 458 456
- US-A- 5 190 089

## Description

Mon invention consiste à protéger les autos, les motos, les engins, les machines ou tout autres objets posés au sol, des arrivées d'eau accidentelles (inondations) ou intentionnelles (nettoyages sols, etc.) et des projections quelles qu'elles soient ; ainsi que des poussières et du soleil.

La protection de véhicules, de machines ou de tout autres objets se fait généralement par une bâche posée en couverture, qu'elle soit fixée ou non. Certaines protections ont l'idée d'envelopper l'objet à protéger en condamnant les ouvertures par des fermetures à laçage ou à glissière, ces fermetures se font par liaison, en partie basse entre un tapis de sol et une couverture ; de ce fait l'infiltration, d'eau notamment, reste possible, l'étanchéité se semblant pas parfaite.

Certains inventeurs ont eu cette idée et ont déposé des brevets comportant des similitudes avec mon invention. Les brevets US font référence à des parois souples se fermant comme un sac (document US-A-4.315.535), à des systèmes sophistiqués avec armatures (document US-A-3.474.803) ou à des bâches en cuve repliable en accordéon au sol et de déployant de bas en haut, fermée en sac ou non (document US-A-5.190.089).

Le document US-A-5.190.089 présente un fond, des renforts supérieur et inférieur et des parois latérales aptes à être pliées en accordéon en position d'attente.

L'idée principale de mon invention telle que definie dans la revendication 1 est un principe de cuvelage c'est à dire qu'au lieu de recouvrir l'objet à protéger, la protection vient l'enfermer de bas en haut, les parois et le sol étant parfaitement liées, comme dans une cuve. Ce principe évite toutes infiltrations basses et une étanchéité parfaite... avec un élément de couverture en complément !

Sans couverture, ma bâche cuvelée peut être installée dans un garage fermé ou dans un box d'immeuble. Dans ce cas, le système est une véritable protection contre l'inondation des sous-sols.

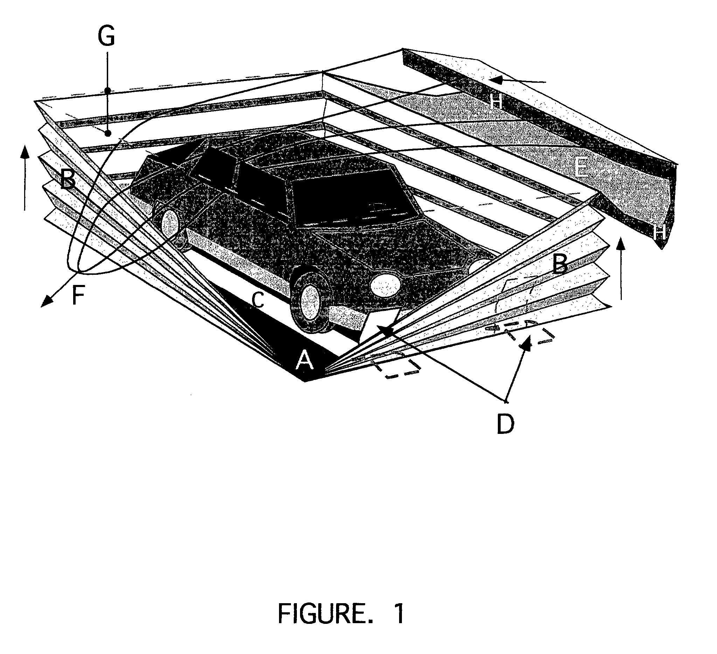

La figure 1 illustre le principe de l'invention.

Ma bâche-cuvelée est constituée de toile plastifiée, de caoutchouc ou autre matière souple et résistante ; rectangulaire, ovale ou d'autres formes ; de dimensions variables selon l'objet protégé.

La bâche cuvelée est constituée d'un sol (A) au périmètre duquel sont fixées des bandes (B) repliées en accordéon. Des renforts (C) sont placés aux emplacements de circulation ou d'appuis constants (Bandes de roulements, socle de machine, etc...) suivant l'objet à protéger. En protection des parois (B) en attente au sol (entrée/sortie de véficules, personnes,etc...) des bandes renforcées (D) forment un pont sur la paroi repliée ; ces renforts de circulation se redressent lors du montage des parois, ils peuvent être métalliques et articulés ; dans certains cas il peut être avantageux de remplacer ces renforts par un renforcement de la bande supérieure des parois accordéon . La fermeture complète de l'ensemble se fait par une couverture (E) , constituée du même matériau que la bâche cuvelée (ou d'un autre) , fixée sur la bande supérieure d'une des parois ; de préférence sur l'un des grands côté (Cas du rectangle) . Cette partie est mise en place en tirant sur un système souple (F). L'étanchéité entre les parois (B) et la couverture est assurée par une fermeture à glissière (G) protégée par un rabat (H) fixé au toit . Afin de faciliter la fermeture définitive des éléments souples (parois de couverture) , un système à pression ou crochets permet une accroche provisoire de ces éléments entre eux. Cette couverture peut-être démontable , dans ce cas, les fermetures à glissières sont montées sur le périmètre des parois (B) et du toit (E).

Les parois peuvent être fixées sur une armature verticale (genre tente) métalliques ou non , démontable , pour peu que la paroi d'entrée soit maintenue en attente baissée; la couverture (E) (Toit) reste fixée fixée sur l'armature . Il convient que la structure comporte une barre de faîtage afin de constituer un toit à deux pentes facilitant l'écoulement des eaux de ruissellement. Dans ces conditions la bâche cuvelée est un véritable garage , démontable , transportable rapidement. Un système souple est fixée de chaque coté de la paroi d'entrée et, circulant dans une gorge ou une poulie fixée aux angles haut de l'armature , en tirant au centre ; vient refermer rapidement celle-ci ! Un moteur électrique peut être installé pour cette manoeuvre, la mise en place des parois se faisant manuellement ou automatiquement.

Dans le cas d'une installation intérieure ,( Garages, box, ateliers etc...) des poulies installées en plafond ou sur armature permettent à l'aide du système souple, de remonter rapidement les parois. L'alimentation électrique du moteur peut être autonome et automatique.

Le dernier volet de la paroi accordéon peut-être constitué d'un boudin à gonflement manuel ou automatique en cas de contact avec un liquide ; par extension , ce boudin peut constituer la paroi complète pour une protection contre les inondations . Il peut être de n' importe quelle forme ou dimensions , renforcé pour protéger des chocs d'objets flottants. Ce système peut être utilisé en installation intérieure .

## Revendications

1. Bâche de protection de véhicules, machines ou objets contre les inondations ou les projections diverses, constituée par une construction liant de manière étanche un sol (A) comportant des renforts et des parois pliées en accordéon lorsqu'elles sont en attente au sol, caractérisée en ce que :
- les renforts sont constitués par des bandes de roulements (C) ou des renforts ponctuels suivant les objets à abriter,
- une ou des bandes rigides (D) formant pont, en protection des parois (B) repliées en attente au sol,
- une couverture souple (E) est comprise et forme toit pouvant être mis en place à l'aide d'un système de tirage (F) et dont la fixation sur les parois (B) est assurée par une fermeture à glissière étanche (G) protégée par un rabat (H) fixé au toit.

2. Bâche de protection selon la revendication 1 caractérisée par un montage sur une armature, en attente d'utilisation et permettant à l'aide de cordelettes (F') circulant dans une gorge ou une poulie la montée ou la descente manuelle ou motorisée des parois (B) ; la couverture (E) étant fixée sur l'armature et formant le toit du garage démontable.

3. Bâche de protection selon la revendication 1 ou 2, caractérisée par son montage à l'intérieur d'un garage ou d'un box, utilisable d'une manière manuelle ou automatique, manipulable à l'aide de cordelettes ou de câbles de tirage circulant sur des poulies installées sur armature ou au plafond en dur.

4. Bâche de protection selon l'une quelconque des revendications précédentes caractérisée en ce qu'elle comporte en partie haute des parois (B) un boudin d'air à gonflage manuel ou automatique.

5. Bâche de protection selon l'une quelconque des revendications précédentes caractérisée en ce que les parois (B) sont constituées de boudins à gonflage manuel ou automatique constituant de fait une protection supplémentaire contre les chocs.

## Patentansprüche

1. Plane zum Schutz von Fahrzeugen, Maschinen oder Gegenständen gegen Hochwasser oder verschiedenartige Bewürfe und Einwirkungen, bestehend aus einer Konstruktion, in welcher ein mit Verstärkungen versehener Boden (A) auf dichte Weise mit in Bereitschaftsstellung am Boden balggefalteten Wänden verbunden ist, dadurch gekennzeichnet, daß
- die Verstärkungen aus Laufbahnen (C) oder, entsprechend den zu schützenden Gegenständen, örtlichen Verstärkungen gebildet werden,
- ein oder mehrere starre Bänder (D) Brücken zum Schutz der auf dem Boden gefalteten Wände (B) bilden,
- die Konstruktion eine geschmeidige Abdeckung (E) aufweist, welche als Dach ausgebildet ist, das mit Hilfe eines Zugsystems (F) übergezogen werden kann, und dessen Befestigung an den Wänden (B) durch einen dichten Gleitverschluß (G) gewährleistet ist, welcher von einem am Dach befestigten Überwurf (H) abgedeckt wird.

2. Schutzplane gemäß Anspruch 1, gekennzeichnet durch eine Montage auf ein Gerippe in Bereitschaftsstellung, welches mit Hilfe von durch eine Rille oder Seilrolle laufenden Schnüren (F') das manuelle oder motorisierte Anheben bzw. Absenken der Wände (B) ermöglicht, wobei die Abdeckung (E) an dem Gerippe befestigt ist und das Dach der demontierbaren Garage bildet.

3. Schutzplane gemäß Anspruch 1 oder 2, gekennzeichnet durch seine Montage innerhalb einer Garage oder Box, auf automatische oder manuelle Weise benutzbar und mit Hilfe von über an dem Gerippe oder am festen Dach installierten Seilrollen laufende Zugschnüren bzw. -kabeln manipulierbar.

4. Schutzplane gemäß irgendeinem der vorhergehenden Ansprüche, dadurch gekennzeichnet, daß sie im oberen Teil der Wände (B) einen manuell oder automatisch aufblasbaren Luftschlauch aufweist.

5. Schutzplane gemäß irgendeinem der vorhergehenden Ansprüche, dadurch gekennzeichnet, daß die Wände (B) aus manuell oder automatisch aufblasbaren Schläuchen gebildet werden und dadurch einen zusätzlichen Schutz gegen Stöße und Schläge gewährleisten.

## Claims

1. Shell-type covering to protect vehicles, machines or objects against flooding or splashing of various materials, consisting of a construction with watertight joining of a floor (A) comprising stiffeners and walls folding in an accordeon arrangement when lying on the ground ready for use, characterized in that,
- the stiffeners consist of rolling strips (C) or local stiffeners specific to the objects to the sheltered,
- one or several rigid strips (D) forming bridging arrangement, to protect the walls (B) folded on the ground ready for use,
- a flexible cover (E) is included and forms a roof which can be installed using a drawing system (F) the fixing of which on the walls (B) is ensured by a watertight zipper (G) protected by a flap (H) secured to the roof.

2. Shell-type covering according to claim 1 characterized by an assembly on a frame, ready for use and allowing manual or motorized raising or lowering of the walls (B) using cords (F') running in a throat or a pulley; the cover (E) being fixed on the frame and forming the roof of the folding garage.

3. Shell-type covering according to claims 1 or 2, characterized
by its erection inside a garage or a parking stall, usable manually or automatically, handled using cords or drawing cables running on pulleys installed on a frame or on the hard ceiling.

4. Shell-type covering according to any of the preceding claims
characterized in that it comprises in the upper part of walls (B) on air cushion which can be inflated automatically or manually.

5. Shell-type covering according to any of the preceding claims
characterized in that the walls (B) consist of manually or automatically inflatable cushions constituting additional protection against impacts.
